# EUROPEAN PATENT APPLICATION

(11) **EP 4 641 500 A1**
(43) Date of publication of application: **29.10.2025**
(21) Application number: 23906320.9
(22) Date of filing: 26.06.2023
(51) Int. Cl.: G06T 7/55, G01B 11/24, G06T 7/00, G06T 7/12, G06T 7/70

(54) **THREE-DIMENSIONAL INFORMATION EXTRACTION DEVICE AND THREE-DIMENSIONAL INFORMATION EXTRACTION METHOD**

(30) Priority: 22.12.2022 JP 2022205111
(71) Applicant: JVCKenwood Corporation, Yokohama-shi, Kanagawa 2210022 (JP)
(72) Inventor: MOMIYAMA Etsuro, Yokohama-shi, Kanagawa 221-0022 (JP); SUGIYAMA Tomoki, Yokohama-shi, Kanagawa 221-0022 (JP)
(74) Representative: Pritzlaff, Stefanie Lydia
(86) International application number: PCT/JP2023/023470
(87) International publication number: WO 2024/134934

(57) **Abstract**

A three-dimensional information extraction device includes: an image acquiring unit configured to acquire an image in which an object is imaged; an object extracting unit configured to extract an outline of the object included in the acquired image; a depth image acquiring unit configured to acquire a depth image including a plurality of depth values at coordinates in a two-dimensional coordinate system which are distance information for the object; a depth value extracting unit configured to extract three-dimensional information of the object on the basis of the depth values included in the acquired depth image and the extracted outline of the object; a cutout unit configured to cut out the depth values in a predetermined range out of the depth values inside of the extracted outline of the object; and an output unit configured to output image information inside of the extracted outline of the object and the cut-out depth values in correlation.

## Description

### TECHNICAL FIELD

The present invention relates to a three-dimensional information extraction device and a three-dimensional information extraction method.

Priority is claimed on Japanese Patent Application No. 2022-205111, filed December 22, 2022, the content of which is incorporated herein by reference.

### BACKGROUND

In the related art, a device that includes a light emitting element such as a vertical cavity surface emitting layer (VCSEL) and a light receiving element such as a ToF sensor at positions around a lens of an imaging device and measures a distance to an object by measuring a time required from emission of light from the light emitting element to reception of light by the ToF sensor through reflection by the object is known (for example, see Patent Document 1). Using this device, it is conceivable that an image (for example, an RGB image) captured by an imaging device and depth information acquired by the ToF sensor be combined to generate three-dimensional point group data.

### Citation List

### Patent Document

Patent Document 1: Japanese Unexamined Patent Application, First Publication No. 2021-26236

### SUMMARY

It is known that measurement accuracy of depth information is uneven and noise is normally included in the depth information. When noise is included in the depth information and it is intended to generate three-dimensional point group data by simply combining an image and the depth information, there is a problem in that a boundary between a specific object such as a person of which three-dimensional information is to be emphasized and another subject is not emphasized and it is not easy to distinguish the specific object from the other subject.

The present embodiment was made in consideration of the aforementioned circumstances, and an objective thereof is to provide a three-dimensional information extraction device and a three-dimensional information extraction method that can emphasize a specific object and easily distinguish the specific object from another subject.
[1] According to an aspect of an embodiment of the present embodiment, there is provided a three-dimensional information extraction device including: an image acquiring unit configured to acquire an image in which an object is imaged; an object extracting unit configured to extract an outline of the object included in the acquired image; a depth image acquiring unit configured to acquire a depth image including a plurality of depth values at coordinates in a two-dimensional coordinate system which are distance information for the object; a depth value extracting unit configured to extract three-dimensional information of the object on the basis of the depth values included in the acquired depth image and the extracted outline of the object; a cutout unit configured to cut out the depth values in a predetermined range out of the depth values inside of the extracted outline of the object; and an output unit configured to output image information inside of the extracted outline of the object and the cut-out depth values in correlation.
[2] In the three-dimensional information extraction device according to [1], the cutout unit calculates a statistic based on the depth values inside of the extracted outline of the object and cuts out the depth values in a predetermined range based on the calculated statistic.
[3] The three-dimensional information extraction device according to [1] or [2] further includes a posture estimating unit configured to estimate positions of a plurality of parts included in the object, and the cutout unit applies different predetermined ranges to the estimated parts.
[4] In the three-dimensional information extraction device according to any one of [1] to [3], the object includes a person, the parts estimated by the posture estimating unit include a head, a trunk, and an arm, and the cutout unit applies different predetermined ranges to the head, the trunk, and the arm.
[5] In the three-dimensional information extraction device according to any one of [1] to [4], the object extracting unit extracts outlines of a plurality of objects from the image, the depth value extracting unit extracts three-dimensional information of the plurality of objects on the basis of the depth values included in the acquired depth image and the extracted outlines of the plurality of objects, the cutout unit cuts out the depth values in a predetermined range out of the depth values inside of the extracted outlines of the plurality of objects, and the output unit outputs image information inside of the extracted outlines of the plurality of objects and the cut-out depth values in correlation.
[6] In the three-dimensional information extraction device according to any one of [1] to [5], the output unit additionally outputs an image from which the inside of the outline of the object extracted by the object extracting unit has been cut out.
[7] According to another aspect of the embodiment of the present embodiment, there is provided a three-dimensional information extraction method including: an image acquiring step of acquiring an image in which an object is imaged; an object extracting step of extracting an outline of the object included in the acquired image; a depth image acquiring step of acquiring a depth image including a plurality of depth values at coordinates in a two-dimensional coordinate system which are distance information for the object; a depth value extracting step of extracting three-dimensional information of the object on the basis of the depth values included in the acquired depth image and the extracted outline of the object; a cutout step of cutting out the depth values in a predetermined range out of the depth values inside of the extracted outline of the object; and an output step of outputting image information inside of the extracted outline of the object and the cut-out depth values in correlation.

According to the embodiment of the present embodiment, it is possible to provide a three-dimensional information extraction device and a three-dimensional information extraction method that can emphasize a specific object and easily distinguish the specific object from another subject.

### BRIEF DESCRIPTION OF THE DRAWINGS

[FIG. 1] A diagram schematically illustrating a three-dimensional information extraction system according to a first embodiment.
[FIG. 2] A diagram schematically illustrating an example of a sectional view of a three-dimensional information acquisition device according to the first embodiment.
[FIG. 3] A functional configuration diagram illustrating an example of a functional configuration of a three-dimensional information extraction device according to the first embodiment.
[FIG. 4] A diagram illustrating an example of an object extracting process that is performed by an object extracting unit according to the first embodiment.
[FIG. 5] A diagram illustrating an example in which the object extracting unit according to the first embodiment performs the object extracting process on a plurality of objects.
[FIG. 6] A diagram illustrating an example of a depth value extracting process that is performed by a depth value extracting unit according to the first embodiment.
[FIG. 7] A diagram illustrating an example of a change in three-dimensional information before and after a cutout process is performed by a cutout unit according to the first embodiment.
[FIG. 8] A diagram illustrating a first example of a result output from an output unit according to the first embodiment.
[FIG. 9] A diagram illustrating a second example of a result output from the output unit according to the first embodiment.
[FIG. 10] A diagram illustrating a third example of a result output from the output unit according to the first embodiment.
[FIG. 11] A functional configuration diagram illustrating an example of a functional configuration of a three-dimensional information extraction device according to a second embodiment.
[FIG. 12] A diagram illustrating an example of a result of posture estimation which is performed by a posture estimating unit according to the second embodiment.

### DETAILED DESCRIPTION

Exemplary embodiments of a distance information acquisition device according to an aspect of the present embodiment will be described below in detail with reference to the accompanying drawings. The following embodiments are only examples, and the present embodiment is not limited to the embodiments. "On the basis of XX" mentioned in this specification means "on the basis of at least XX" and includes "on the basis of another element in addition to XX." "On the basis of XX" is not limited to direct use of XX and includes use of results obtained by performing calculation or processing on XX. "XX" is an arbitrary factor (for example, arbitrary information). In the drawings used for the following description, scales, numbers, and the like of constituent members may be made to be different from actual scales, numbers, and the like of the constituent members in order to make the constituent members be easily recognized.

### [Related art]

Problems to be solved by the present embodiment will be first described below. With a ToF camera according to the related art, depth information measured using a ToF method is collected in the form of a beat map by pixels which are two-dimensionally arranged, and a distance image is generated. An image of an RGB image is captured by an imaging device. Three-dimensional point group data can be generated by combining the image such as an RGB image with the depth information of the distance image. However, much noise may be included in the distance image. The following problems may occur because noise is included in the distance image.

A first problem which is caused due to noise included in a distance image will be first described. In general, it is known that noise is included in both a part (hereinafter referred to as an object part) associated with an object of which three-dimensional point group data is to be generated and a part (hereinafter referred to as a background part) associated with the other background in a distance image. Since noise is present in both the object part and the background part, the object part and the background part may be coupled. That is, there is a problem in that an object of which three-dimensional point group data is to be generated and the other background are unified due to noise included in the distance image. When the object of which three-dimensional point group data is to be generated and the background are unified, the object of which three-dimensional point group data is to be generated is not emphasized, and three-dimensional information without contrast is generated.

A second problem which is caused due to noise included in a distance image will be next described. Distance information on a plurality of objects may be present in a distance image. For each of a plurality of objects of which distance information is present, three-dimensional point group data may be intended to be generated. In this case, when it is intended to generate three-dimensional point group data of each of a plurality of objects, there is a problem in that a point of interest is lost. For example, a process of focusing on a part of interest can be performed in a two-dimensional moving image. On the other hand, when subjects are laterally arranged in parallel, there is a problem in that both are in-focus, which is not effective in view of emphasis of a point of interest.

A third problem which is caused due to noise included in a distance image will be then described. In general, it is known that a spatial filter is applied to remove noise at the time of generation of three-dimensional point group data. A process of applying the spatial filter is also known as a smoothing process. Therefore, in the smoothing process, there is a problem in that edge parts of the object of which three-dimensional point group data is to be generated and the background are smoothed and pulled noise (flying pixel noise) is generated. This noise may be generated in front of or behind an object of which three-dimensional point group data is to be generated.

### [First embodiment]

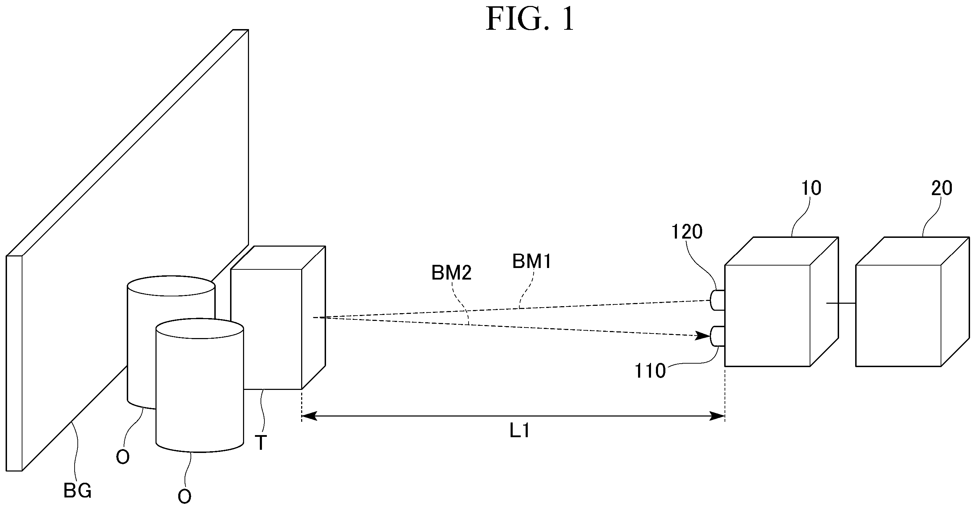

Embodiments of the present embodiment are for solving the aforementioned problems. A first embodiment will be described below with reference to FIGS. 1 to 10.

FIG. 1 is a diagram schematically illustrating a three-dimensional information extraction system according to the first embodiment. The three-dimensional information extraction system 1 will be schematically described below with reference to the drawing. The three-dimensional information extraction system 1 acquires three-dimensional information of an object T which is present in a three-dimensional space. The number of objects T may be one or two or more. The three-dimensional information acquired by the three-dimensional information extraction system 1 includes at least information on a three-dimensional shape of the object T.

The three-dimensional information extraction system 1 measures a distance L1 from a three-dimensional information acquisition device 10 to the object T. The three-dimensional information acquisition device 10 acquires a three-dimensional shape of the object T by measuring the distance L1 from each of coordinates in a two-dimensional coordinate system to the object T. The object T of which the three-dimensional information acquisition device 10 is to acquire a three-dimensional shape includes all things of which three-dimensional information is to be acquired such as animals or objects. In the following description, for example, it is assumed that the object T is a person. A background BG may be present behind the object T. The background BG may be, for example, a screen such as a green back which is used for imaging or a simple wall or floor, a building, a natural object, or other backgrounds which are projected at the time of normal imaging. An object O of which three-dimensional information is not to be acquired but which has a three-dimensional shape may be present near the object T. A plurality of objects O may be present. The three-dimensional information extraction system 1 may be used, for example, by a professional cameraman in an indoor photo studio or may be used by a general user in the same situation as taking a photograph outdoors.

The three-dimensional information extraction system 1 includes a three-dimensional information acquisition device 10 and a three-dimensional information extraction device 20. The three-dimensional information acquisition device 10 and the three-dimensional information extraction device 20 may be provided in a single edge device or may be connected to each other via a predetermined communication network. The three-dimensional information extraction device 20 may be provided as a server device (not illustrated) connected to the three-dimensional information acquisition device 10 via a predetermined communication network. When the three-dimensional information extraction device 20 is provided as a server device, a plurality of three-dimensional information acquisition devices 10 may be connected to one three-dimensional information extraction device 20 via a predetermined communication network.

The three-dimensional information acquisition device 10 includes a light receiving unit 110 and an irradiation unit 120. The light receiving unit 110 may include, for example, an optical-system lens such as an objective lens. The irradiation unit 120 irradiates an object T with illumination light. The irradiation unit 120 may be, for example, a light source such as a laser diode. More specifically, the irradiation unit 120 may be a vertical cavity surface emitting laser (VCSEL) that can emit a laser beam in the vertical direction. Light (a first light beam BM1) emitted from the irradiation unit 120 is reflected by the object T, and light (a second light beam BM2) reflected by the object T is incident on the light receiving unit 110. The three-dimensional information acquisition device 10 measures a distance L1 from the three-dimensional information acquisition device 10 to the object T on the basis of a time (time to flight) required from emission of light to reception of light.

The light receiving unit 110 includes a plurality of light receiving elements which are arranged in a two-dimensional array. The three-dimensional information acquisition device 10 measures a three-dimensional shape of the object T on the basis of distance measurement information for each of the plurality of light receiving elements. In the illustrated example, the light receiving unit 110 and the irradiation unit 120 forming a pair are illustrated, but a configuration in which a plurality of irradiation units 120 are provided for one light receiving unit 110 may be employed. In this case, the plurality of irradiation units 120 are provided around the light receiving unit 110.

The three-dimensional information acquisition device 10 includes an image sensor which is not illustrated. The image sensor includes a plurality of pixels which are arranged in a two-dimensional array, and the plurality of pixels included in the image sensor receive visible light formed by the optical-system lens of the light receiving unit 110 and generate a visible-light image (an RGB image). The system of the visible-light image is not limited to the RGB system, but may be a YCbCr system or a grayscale (monochrome) system.

The three-dimensional information extraction device 20 extracts three-dimensional information of a specific object out of the three-dimensional information acquired by the three-dimensional information acquisition device 10. The three-dimensional information acquired by the three-dimensional information acquisition device 10 includes three-dimensional information of a plurality of objects O or a background BG, or the like in addition to an object T of which three-dimensional information is to be generated as illustrated in the drawing. Therefore, the three-dimensional information extraction device 20 extracts three-dimensional information of the object T of which three-dimensional information is to be generated out of the three-dimensional information acquired by the three-dimensional information acquisition device 10. The object T of which the three-dimensional information extraction device 20 is to generate three-dimensional information may be automatically determined by the three-dimensional information extraction device 20 or may be determined through a user's selection.

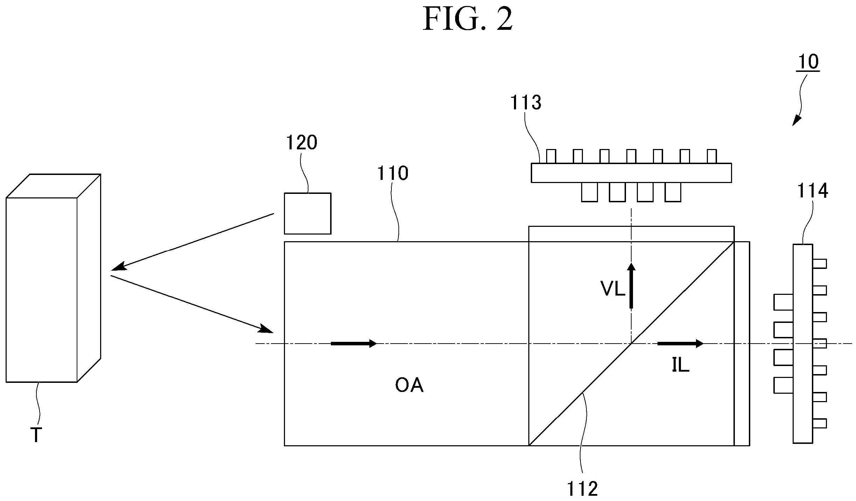

FIG. 2 is a diagram schematically illustrating an example of a sectional view of the three-dimensional information acquisition device according to the first embodiment. An example of arrangement of the image sensor and the ToF sensor in the three-dimensional information acquisition device 10 will be described below with reference to the drawing. The three-dimensional information acquisition device 10 further includes a visible light reflecting dichroic film 112, an image sensor 113, and a ToF sensor 114.

Light emitted from the irradiation unit 120 and reflected by the object T is incident on the light receiving unit 110. In the drawing, an optical axis of incident light is illustrated as an optical axis OA. Light incident on the light receiving unit 110 is incident on the visible light reflecting dichroic film 112. An optical-system lens or the like which is not illustrated may be provided upstream from the visible light reflecting dichroic film 112.

The visible light reflecting dichroic film 112 is provided on an optical path between the light receiving unit 110 and the ToF sensor 114. The visible light reflecting dichroic film 112 transmits a part of the incident light (specifically, infrared light) and reflects the other part of the light (specifically, visible light). The visible light reflecting dichroic film 112 guides light to the ToF sensor 114 by transmitting a part of light emitted from the irradiation unit 120 and reflected by the object T. Light transmitted by the visible light reflecting dichroic film 112 is referred to as infrared light IL. Light reflected by the visible light reflecting dichroic film 112 is referred to as visible light VL. Infrared light IL and visible light VL pass through substantially the same optical axis upstream from the visible light reflecting dichroic film 112. Substantially the same range may be, for example, a range in which an optical path is formed by common lenses.

Light divided into two optical paths by the visible light reflecting dichroic film 112 is received by sensors provided in the optical paths. Specifically, infrared light **IL** transmitted by the visible light reflecting dichroic film 112 is received by the ToF sensor 114. Light reflected by the visible light reflecting dichroic film 112 is received by the image sensor 113.

The image sensor 113 includes a plurality of pixels which are two-dimensionally arranged. The image sensor 113 may include pixels of RGB colors which are arranged in a Bayer array. Each of the plurality of pixels receives visible light VL and acquires information required to generate a visible-light image.

The ToF sensor 114 includes a plurality of pixels which are two-dimensionally arranged. Each of the plurality of pixels receives infrared light IL and acquires information required for distance conversion.

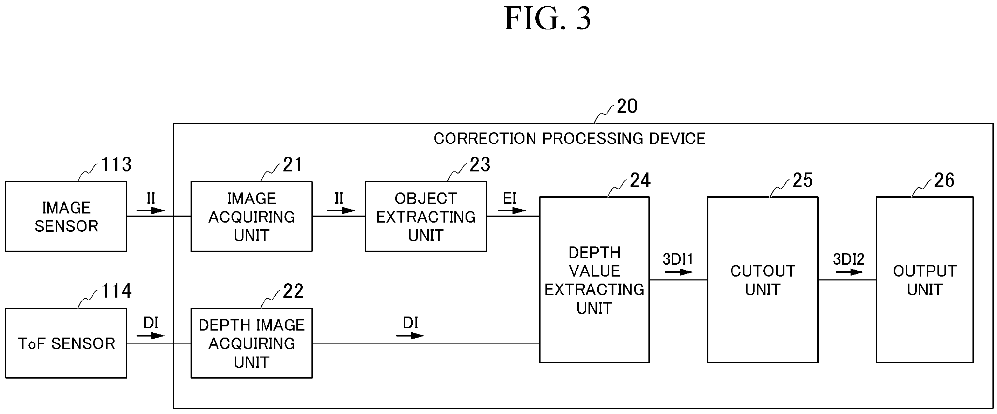

FIG. 3 is a functional configuration diagram illustrating an example of the functional configuration of the three-dimensional information extraction device 20 according to the first embodiment. An example of the functional configuration of the three-dimensional information extraction device 20 will be described below with reference to the drawing. The three-dimensional information extraction device 20 includes an image acquiring unit 21, a depth image acquiring unit 22, an object extracting unit 23, a depth value extracting unit 24, a cutout unit 25, and an output unit 26. These functional units are realized, for example, using an electronic circuit. Each functional unit may include a storage means such as a semiconductor memory or a magnetic hard disk device therein according to necessity. Each function may be realized by a computer and software.

The image acquiring unit 21 acquires image information II including information on an image (a visible-light image such as an RGB image) in which an object T is imaged from the image sensor 113. The image information II includes luminance information at coordinates of the two-dimensional coordinate system. The luminance information may correspond to the colors of RGB. The image acquiring unit 21 outputs the acquired image information II to the object extracting unit 23.

The depth image acquiring unit 22 acquires depth image information DI including information on a depth image. The depth image includes a plurality of depth values at coordinates of the two-dimensional coordinate system. A depth value is distance information for the object T which is measured in the ToF system. The depth image acquiring unit 22 outputs the acquired depth image information DI to the depth value extracting unit 24.

Here, it is preferable that the image acquired by the image acquiring unit 21 and the depth image be obtained by imaging the same object T at the same angle of view. In other words, it is preferable that coordinates of the image acquired by the image acquiring unit 21 correspond to coordinates of the depth image. In order for the coordinates to correspond to each other, in the present embodiment, a configuration in which light is divided into infrared light IL and visible light VL using the visible light reflecting dichroic film 112 described above with reference to FIG. 2 is used.

The object extracting unit 23 extracts a shape of an object included in the image acquired by the image acquiring unit 21. Extraction of a shape of an object may be specifically to extract an outline part of the object in a two-dimensional image. The object extracting unit 23 may extract a shape of an object included in the image acquired by the image acquiring unit 21, for example, on the basis of a known object detection library using a neural network. Specifically, the object extracting unit 23 detects an outline of an object such as a person on the basis of a known library such as Detectron2. The object extracting unit 23 outputs information on the extracted outline as extraction information EI to the depth value extracting unit 24.

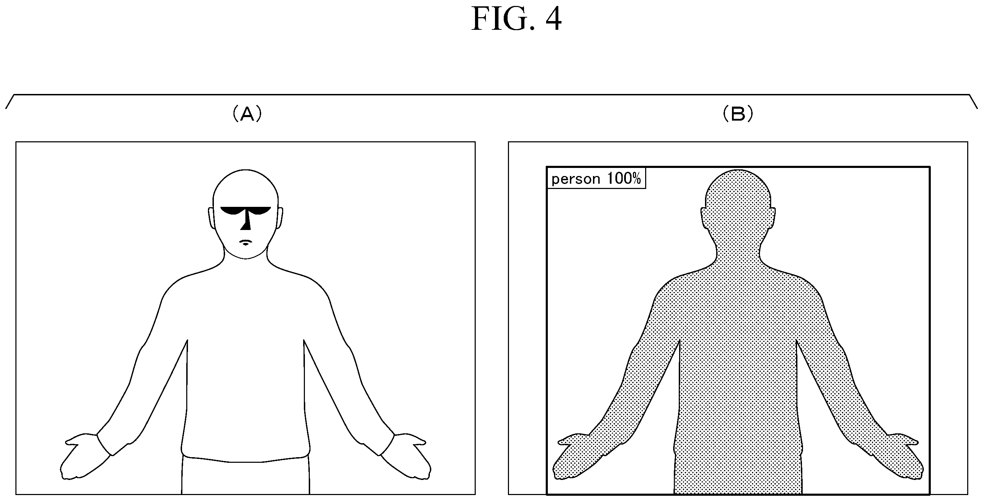

FIG. 4 is a diagram illustrating an example of an object extracting process that is performed by the object extracting unit according to the first embodiment. An example of the object extracting process that is performed by the object extracting unit 23 will be described below with reference to the drawing. FIG. 4(A) is an example of an image captured by the image sensor 113. The object extracting unit 23 detects a shape of an object of which three-dimensional information is to be generated in the image illustrated in FIG. 4(A). In the present embodiment, since the three-dimensional information extraction device 20 extracts three-dimensional information on a person, the object extracting unit 23 extracts a shape of a person part in the image illustrated in FIG. 4(A). FIG. 4(B) illustrates a result of the object extracting process. As illustrated in the drawing, the object extracting unit 23 identifies the outline part of the person and identifies that the inside of the outline is the person. In the illustrated example, a bounding box and a class "person" and a likelihood "100%" corresponding to the bounding are illustrated. The object extracting unit 23 may detect a class and a likelihood or may not detect them.

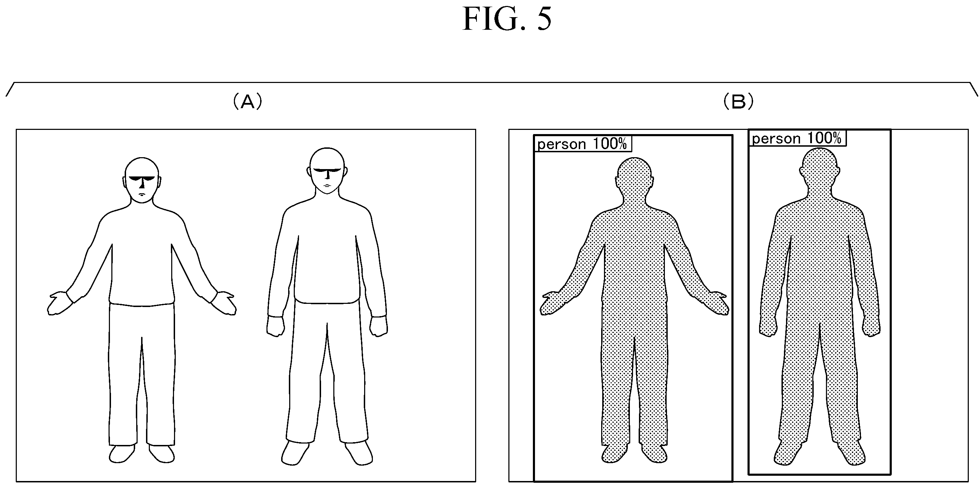

FIG. 5 is a diagram illustrating an example in which the object extracting unit according to the first embodiment performs the object extracting process on a plurality of objects. An example in which the object extracting process is performed on a plurality of objects will be described below with reference to the drawing. FIG. 5(A) illustrates an example of an image captured by the image sensor 113. As illustrated in the drawing, a plurality of persons appear in FIG. 5(A). The object extracting unit 23 detects shapes of the plurality of objects of which three-dimensional information is to be generated in the image illustrated in FIG. 5(A). FIG. 5(B) illustrates a result of the object extracting process. As illustrated in the drawing, the object extracting unit 23 identifies an outline part of each of the plurality of persons and identifies that the inside of the outline is a person. In the illustrated example, a bounding box and a class and a likelihood corresponding to the bounding are illustrated for each of the plurality of persons. The object extracting unit 23 may detect the class and the likelihood for each of the plurality of extracted objects and may not detect them.

Referring back to FIG. 3, the depth value extracting unit 24 acquires the extraction information EI from the object extracting unit 23 and acquires the depth image information DI from the depth image acquiring unit 22. The depth value extracting unit 24 extracts three-dimensional information of the object on the basis of the depth values included in the acquired depth image and the extracted outline of the object. Specifically, the depth value extracting unit 24 extracts the depth values of a shape part of the object identified by the extracted outline of the object with reference to the depth image. The depth value extracting unit 24 extracts three-dimensional information of the object of which three-dimensional informationa is to be generated by extracting the depth values of the shape part of the object. The three-dimensional information extracted by the depth value extracting unit 24 may include noise such as flying pixel noise. The depth value extracting unit 24 outputs the extracted information as first three-dimensional information 3DI1 to the cutout unit 25.

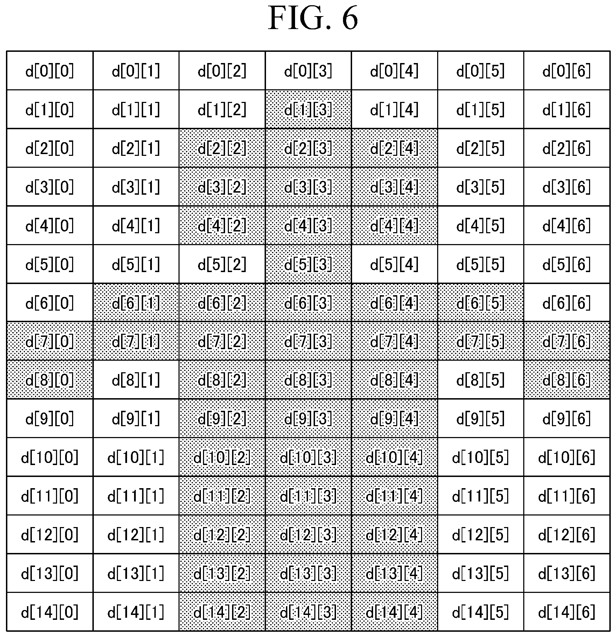

FIG. 6 is a diagram illustrating an example of a depth value extracting process that is performed by the depth value extracting unit according to the first embodiment. An example of the depth value extracting process that is performed by the depth value extracting unit 24 will be described below with reference to the drawing. **In** the drawing, coordinates centered on the object (a person in the illustrated example) extracted by the object extracting unit 23 in the image acquired by the image acquiring unit 21 are illustrated. A range of the image illustrated in FIG. 6 may be, for example, a range identified by the bounding box in FIG. 4(B). The coordinates in FIG. 6 are correlated with elements of an array in which the depth values are stored. In the illustrated example, an array including elements d[0][0] to d[14][6] is illustrated. A depth value corresponding to coordinates to which the corresponding element is assigned is stored in each element. In the illustrated example, the inner part of the outline of the object extracted by the object extracting unit 23 is hatched. The depth value extracting unit 24 extracts the depth values of the elements corresponding to the hatched part and performs arrangement thereof.

Referring back to FIG. 3, the cutout unit 25 acquires the first three-dimensional information 3DI1 from the depth value extracting unit 24. Here, the three-dimensional information of the object included in the first three-dimensional information 3DI1 may include noise such as flying pixel noise. Therefore, the cutout unit 25 removes the noise by adjusting the depth values. An example of adjustment of the depth values performed by the cutout unit 25 may be deleting the depth values departing from a predetermined range. Specifically, the cutout unit 25 deletes the depth values departing from a predetermined range by cutting out the depth values in the predetermined range out of the depth values inside of the extracted outline of the object. In the following description, the process of cutting out the depth values in the predetermined range may be referred to as "cutout" or "a cutout process." The cutout unit 25 outputs three-dimensional information acquired as a result of the cutout process as second three-dimensional information 3DI2 to the output unit 26.

Whether a depth value is in the predetermined range may be determined by performing a statistic operation of the depth values extracted by the depth value extracting unit 24. That is, the cutout unit 25 may calculate a statistic by performing the statistic operation based on a plurality of depth values inside of the extracted outline of the object and cut out the depth values in a predetermined range based on the calculated statistic. The statistic operation includes, for example, an arithmetic operation of an average value or a standard deviation. The cutout unit 25 calculates, for example, an average value of the depth values extracted by the depth value extracting unit 24 and determines a predetermined range. The predetermined range may be, for example, a range of average±α. The cutout unit 25 cuts out the depth values in the determined predetermined range. The value of α may be determined in advance or may be determined on the basis of the result of the statistic operation.

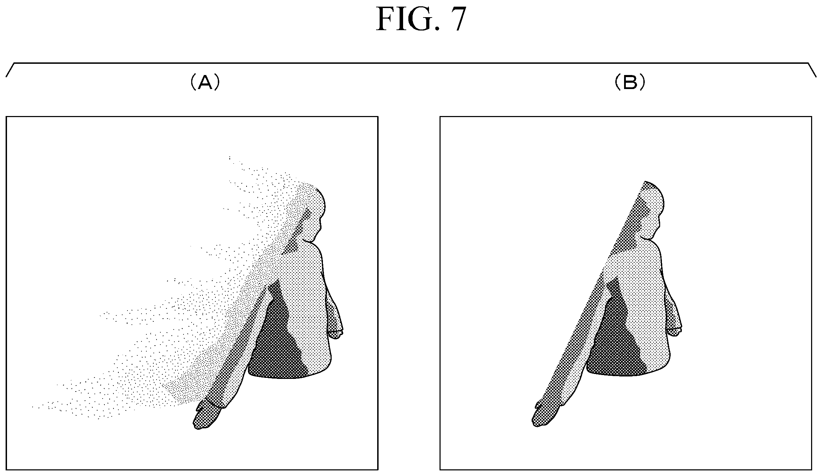

FIG. 7 is a diagram illustrating an example of a change of three-dimensional information before and after the cutout process has been performed by the cutout unit according to the first embodiment. Advantageous effects of the cutout performed by the cutout unit 25 will be described below with reference to the drawing. FIG. 7(A) illustrates an example of three-dimensional information before the cutout process has been performed by the cutout unit 25. As illustrated in the drawing, the three-dimensional information before the cutout process has been performed by the cutout unit 25 includes noise such as flying pixel noise and represents that a person seems to be pulled back. In the illustrated example, an object other than a person is not particularly illustrated. On the other hand, for example, when another object or the like is present, the three-dimensional information before the cutout process has been performed by the cutout unit 25 may be coupled to the other object. FIG. 7(B) illustrates an example of the three-dimensional information after the cutout process has been performed by the cutout unit 25. As illustrated in the drawing, noise occurring in FIG. 7(A) is cut out, and clean three-dimensional information is obtained.

Referring back to FIG. 3, the output unit 26 acquires the second three-dimensional information 3DI2 from the cutout unit 25. The output unit 26 outputs three-dimensional information of the object on the basis of the acquired second three-dimensional information 3DI2. The three-dimensional information of the object output from the output unit 26 may be information in which image information inside of the extracted outline of the object is correlated with the cut-out depth values and may be specifically three-dimensional point group data of the extracted object.

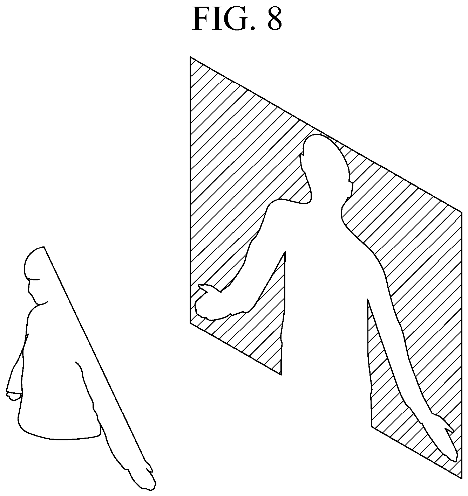

The output unit 26 may output a combination of the three-dimensional information of an object of which three-dimensional information is to be generated and two-dimensional image information. In this case, the output unit 26 may additionally output the image acquired by the image acquiring unit 21 and an image in which the inside of the outline of the object extracted by the object extracting unit 23 has been cut out in addition to outputting the three-dimensional information of the object. An example of a result output from the output unit 26 will be described below with reference to FIGS. 8 to 10.

FIG. 8 is a diagram illustrating a first example of the result output from the output unit according to the first embodiment. According to the first example, three-dimensional information of an object of which three-dimensional information is to be generated and two-dimensional image information from which the object has been cut out are output. For example, as illustrated in the drawing, the output unit 26 may dispose a two-dimensional image at a position separated by a predetermined distance from the three-dimensional information of the object of which three-dimensional information is to be generated. By disposing the two-dimensional image at a position separated by a predetermined distance from the three-dimensional information, it is possible to generate information with visual effects representing that a target object seems to float from the two-dimensional image. This output method is effective, for example, when three-dimensional information of a lecturing teacher is extracted and information of a blackboard in the background is output as two-dimensional information. The two-dimensional image in the background may not be necessarily an image from which an object of which three-dimensional information is to be generated has been cut out as long as the two-dimensional image is based on an image acquired by the image acquiring unit 21.

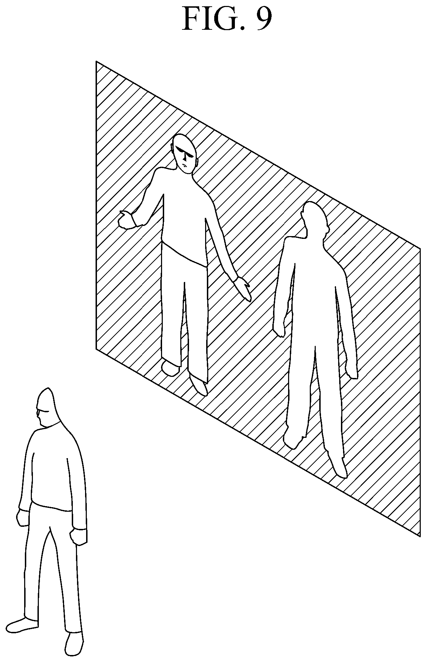

FIG. 9 is a diagram illustrating a second example of the result output from the output unit according to the first embodiment. According to the second example, a plurality of (two in the illustrated example) persons are present in a two-dimensional image. In this case, the three-dimensional information acquisition device 10 may display three-dimensional information of one of the two persons present in the image and two-dimensional image information from which the one person has been cut out. Specifically, when a plurality of objects are extracted by the object extracting unit 23, a configuration in which an object to be three-dimensionally displayed is selected by a selection unit which is not illustrated and three-dimensional information on only the selected object is displayed may be employed. In the illustrated example, two persons are present in the two-dimensional image, but the present embodiment is not limited to this example and is applied in the same way when three or more persons are present, and three-dimensional information of one of a plurality of persons may be displayed.

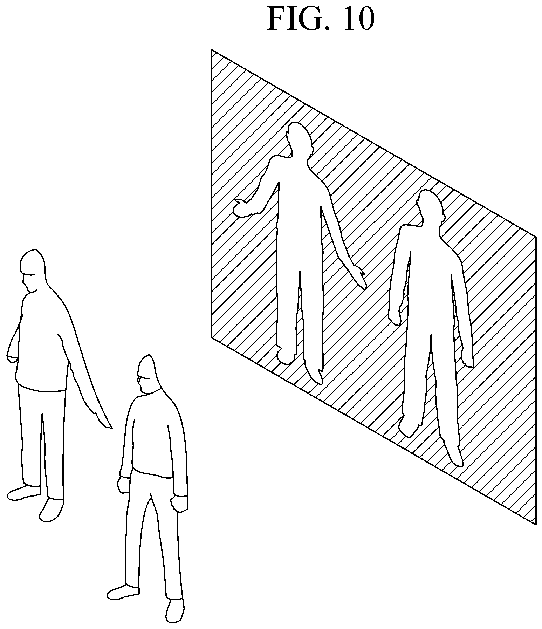

FIG. 10 is a diagram illustrating a third example of the result output from the output unit according to the first embodiment. According to the third example, similarly to the second example, a plurality of (two in the illustrated example) persons are present in a two-dimensional image. In this case, the three-dimensional information acquisition device 10 may display three-dimensional information of both the two persons present in the image and two-dimensional image information from which the two persons have been cut out. Specifically, when a plurality of objects are extracted by the object extracting unit 23, a configuration in which three-dimensional information of a plurality of objects is displayed may be employed. An object to be three-dimensionally displayed out of the plurality of objects extracted by the object extracting unit 23 may be selected by a selection unit which is not illustrated. In the illustrated example, two persons are present in the two-dimensional image, but the present embodiment is not limited to this example and is applied in the same way when three or more persons are present, and three-dimensional information of each of a plurality of persons may be displayed.

### [Summary of first embodiment]

According to the aforementioned embodiment, the three-dimensional information extraction device 20 includes the image acquiring unit 21 to acquire an image in which an object is imaged, the object extracting unit 23 to extract an outline of the object of which three-dimensional information is to be generated and which is included in the acquired image, the depth image acquiring unit 22 to acquire a depth image including a plurality of depth values at coordinates in a two-dimensional coordinate system which are distance information for the object, the depth value extracting unit 24 to extract three-dimensional information of the object on the basis of the depth values included in the acquired depth image and the extracted outline of the object, the cutout unit 25 to cut out the depth values in a predetermined range out of the depth values inside of the extracted outline of the object, and the output unit 26 to correlate image information inside of the extracted outline of the object with the cut-out depth values and output three-dimensional information of the object of which three-dimensional information is to be generated. That is, according to the present embodiment, the three-dimensional information extraction device 20 extracts, cuts, and outputs three-dimensional information of a specific object from the three-dimensional information acquired by the three-dimensional information acquisition device 10. It is possible to display the three-dimensional information of the specific object by extracting the three-dimensional information of the specific object, to remove noise by performing a cutout process, and to emphasize the specific object. Accordingly, according to the present embodiment, it is possible to emphasize the specific object and to easily distinguish the specific object from another subject.

Even when another object is present, it is possible to extract an outline of a specific object through the object extracting process performed by the object extracting unit 23. That is, according to the present embodiment, it is not necessary to acquire an image and a depth image using a special environment such as a green back and it is possible to easily generate three-dimensional information of the specific object.

According to the aforementioned embodiment, the cutout unit 25 calculates a statistic based on the depth values inside of the outline of the object extracted by the object extracting unit 23 and cuts out the depth values in a predetermined range based on the calculated statistic. That is, the three-dimensional information extraction device 20 includes the cutout unit 25 to exclude the depth values considered as noise and to generate three-dimensional information of the object of which three-dimensional information is to be generated. Accordingly, according to the present embodiment, since noise can be removed, the three-dimensional information of the specific object output from the three-dimensional information extraction device 20 is clearly distinguished from another subject, and it is possible to more emphasize the specific object.

According to the aforementioned embodiment, the object extracting unit 23 extracts outlines of a plurality of objects from the image, the depth value extracting unit 24 extracts three-dimensional information of the plurality of objects on the basis of the depth values included in the acquired depth image and the extracted outlines of the plurality of objects, the cutout unit 25 cuts out the depth values in a predetermined range out of the depth values inside of the extracted outlines of the plurality of objects, and the output unit 26 outputs image information inside of the extracted outlines of the plurality of objects and the cut-out depth values in correlation. That is, according to the present embodiment, the three-dimensional information extraction device 20 extracts three-dimensional information of the plurality of objects from the two-dimensional image and the distance image forming a pair. Accordingly, according to the present embodiment, it is possible to emphasize the plurality of objects and to easily distinguish the plurality of objects from another subject.

According to the aforementioned embodiment, the output unit 26 further outputs an image in which the inside of the outline of the object extracted by the object extracting unit 23 has been cut out. That is, the output unit 26 outputs three-dimensional information from which the specific object has been cut out and two-dimensional image information from which the object has been cut out in correlation. Accordingly, according to the present embodiment, it is possible to output information with visual effects representing that the specific object seems to float from the two-dimensional image.

### [Second embodiment]

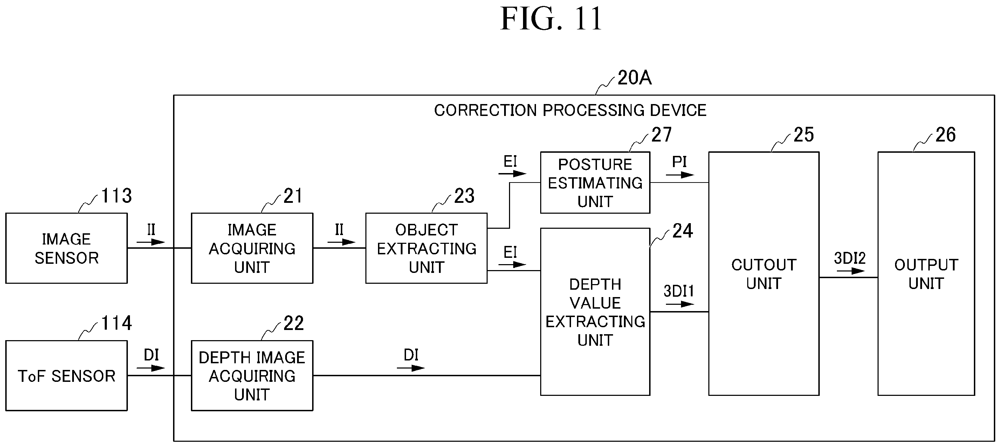

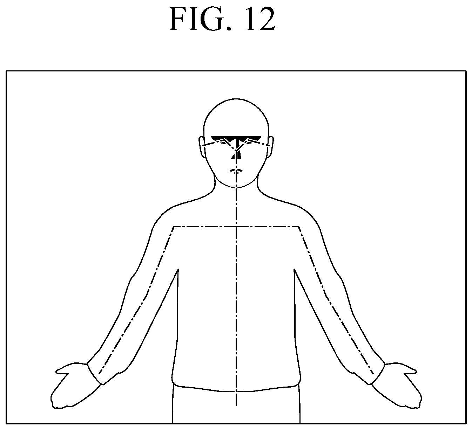

A second embodiment will be described below with reference to FIGS. 11 and 12. The second embodiment is different from the first embodiment, in that a posture of a specific object is estimated and the cutout process based on the estimated posture is performed.

FIG. 11 is a functional configuration diagram illustrating an example of a functional configuration of a three-dimensional information extraction device according to the second embodiment. An example of the functional configuration of the three-dimensional information extraction device 20A according to the second embodiment will be described below with reference to the drawing. The three-dimensional information extraction device 20A is different from the three-dimensional information extraction device 20 in that a posture estimating unit 27 is further provided. In the description of the three-dimensional information extraction device 20A, the same constituents as the three-dimensional information extraction device 20 may be referred to by the same reference signs, and a description thereof may be omitted.

The posture estimating unit 27 estimates a posture of an object extracted by the object extracting unit 23. Specifically, the posture estimating unit 27 acquires extraction information EI from the object extracting unit 23 and estimates the posture of the object on the basis of the extraction information EI. Estimation of a posture of an object may be specifically estimating positions of a plurality of parts included in the object. For example, when an object of three-dimensional information generated by the three-dimensional information extraction device 20 is a person, the parts estimated by the posture estimating unit 27 may include a head, a trunk, and an arm. The posture estimating unit 27 outputs information on the estimated posture as posture information PI to the cutout unit 25. The cutout unit 25 acquires the posture information PI from the posture estimating unit 27 and performs a cutout process by applying different predetermined ranges to the parts estimated by the posture estimating unit 27. For example, when an object of three-dimensional information generated by the three-dimensional information extraction device 20 is a person, the cutout unit 25 may perform the cutout process by applying different predetermined ranges to the head, the trunk, the arm, and the like.

FIG. 12 is a diagram illustrating an example of a result of posture estimation performed by the posture estimating unit according to the second embodiment. An example of the result of posture estimation performed by the posture estimating unit 27 will be described below with reference to the drawing. The illustrated example is an example of a result of posture estimation performed on the image illustrated in FIG. 4(A). The posture estimating unit 27 determines, for example, keypoints constituting a body of a person. The object extracting unit 23 estimates the posture such that the head, the trunk, and the arm of the person can be distinguished as illustrated in the drawing. Specifically, PoseNet which is a known machine learning model or the like may be used to estimate the posture.

For example, the cutout unit 25 performs an offset of ±α with respect to a predetermined range for each estimated keypoint. Specifically, the cutout unit 25 applies an offset of α1 to the head, applies an offset of α2 to the trunk, and applies an offset of α3 to the arm. Thicknesses of the head, the trunk, and the arm may be different from each other, and appropriate thicknesses of the parts may be determined in advance. Therefore, in the present embodiment, the posture estimating unit 27 is additionally provided, and thus it is possible to appropriately cutout the thickness of the object by applying different offsets to the parts in the predetermined range and performing the cutout process.

### [Summary of second embodiment]

According to the aforementioned embodiment, the three-dimensional information extraction device 20A further includes the posture estimating unit 27 to estimate positions of a plurality of parts included in an object, and the cutout unit 25 applies different predetermined ranges to the estimated parts. That is, the three-dimensional information extraction device 20A determines appropriate thicknesses of the parts of the object and performs the cutout process based on the determined thicknesses. Accordingly, according to the present embodiment, since noise can be appropriately removed, it is possible to emphasize the specific object and to easily distinguish the specific object from another subject. According to the present embodiment, since the posture estimating unit 27 is further provided, it is possible to set the thicknesses of the parts to appropriate thicknesses and to generate natural three-dimensional information.

According to the aforementioned embodiment, the object of which the three-dimensional information extraction device 20 is to generate three-dimensional information includes a person, the parts estimated by the posture estimating unit 27 include a head, a trunk, and an arm, and the cutout unit 25 applies different predetermined ranges to the head, the trunk, and the arm. That is, the three-dimensional information extraction device 20A determines appropriate thicknesses for the parts of a person and performs the cutout process based on the determined thicknesses. Accordingly, according to the present embodiment, since noise can be appropriately removed, it is possible to emphasize the specific object and to easily distinguish the specific object from another subject. According to the present embodiment, it is possible to set the thicknesses of the parts of a person to appropriate thicknesses and to generate more natural three-dimensional information.

The aforementioned embodiment is based on the premise that the three-dimensional information extracting process is performed on a still image. However, the present embodiment is not limited to an example of a still image and may be applied to a moving image. When the present embodiment is applied to a moving image, the aforementioned three-dimensional information extracting process may be performed for each frame, or the aforementioned three-dimensional information extracting process may be performed every several frames in order to reduce a process load. By applying the present embodiment to a moving image, it is possible to emphasize a specific object even in the moving image and to easily distinguish the specific object from another subject.

While embodiments of the present invention have been described above, the present invention is not limited to the embodiments, and various modifications may be added thereto without departing from the gist of the present invention. The aforementioned embodiments may be appropriately combined.

### INDUSTRIAL APPLICABILITY

According to the present invention, it is possible to provide a three-dimensional information extraction device and a three-dimensional information extraction method that can emphasize a specific object and easily distinguish the specific object from another subject.

### REFERENCE SIGNS LIST

1 Three-dimensional information acquisition system
10 Three-dimensional information acquisition device
110 Light receiving unit
112 Visible light reflecting dichroic film
113 Image sensor
114 ToF sensor
120 Irradiation unit
20 Three-dimensional information extraction device
21 Image acquiring unit
22 Depth image acquiring unit
23 Object extracting unit
24 Depth value extracting unit
25 Cutout unit
26 Output unit
27 Posture estimating unit
BM Irradiation light
VL Visible light
IL Infrared light
OA Optical axis
II Image information
DI Depth image information
EI Extraction information
3DT1 First three-dimensional information
3DT2 Second three-dimensional information
PI Posture information

## Claims

1. A three-dimensional information extraction device (20) comprising:
an image acquiring unit (21) configured to acquire an image in which an object is imaged;
an object extracting unit (23) configured to extract an outline of the object included in the acquired image;
a depth image acquiring unit (22) configured to acquire a depth image including a plurality of depth values at coordinates in a two-dimensional coordinate system which are distance information for the object;
a depth value extracting unit (24) configured to extract three-dimensional information of the object on the basis of the depth values included in the acquired depth image and the extracted outline of the object;
a cutout unit (25) configured to cut out the depth values in a predetermined range out of the depth values inside of the extracted outline of the object; and
an output unit (26) configured to output image information inside of the extracted outline of the object and the cut-out depth values in correlation.

2. The three-dimensional information extraction device according to claim 1, wherein the cutout unit calculates a statistic based on the depth values inside of the extracted outline of the object and cuts out the depth values in a predetermined range based on the calculated statistic.

3. The three-dimensional information extraction device according to claim 1, further comprising a posture estimating unit (27) configured to estimate positions of a plurality of parts included in the object,
wherein the cutout unit applies different predetermined ranges to the estimated parts.

4. The three-dimensional information extraction device according to claim 3, wherein the object includes a person,
wherein the parts estimated by the posture estimating unit include a head, a trunk, and an arm, and
wherein the cutout unit applies different predetermined ranges to the head, the trunk, and the arm.

5. The three-dimensional information extraction device according to claim 1, wherein the object extracting unit extracts outlines of a plurality of objects from the image,
wherein the depth value extracting unit extracts three-dimensional information of the plurality of objects on the basis of the depth values included in the acquired depth image and the extracted outlines of the plurality of objects,
wherein the cutout unit cuts out the depth values in a predetermined range out of the depth values inside of the extracted outlines of the plurality of objects, and
wherein the output unit outputs image information inside of the extracted outlines of the plurality of objects and the cut-out depth values in correlation.

6. The three-dimensional information extraction device according to claim 1, wherein the output unit additionally outputs an image from which the inside of the outline of the object extracted by the object extracting unit has been cut out.

7. A three-dimensional information extraction method comprising:
an image acquiring step of acquiring an image in which an object is imaged;
an object extracting step of extracting an outline of the object included in the acquired image;
a depth image acquiring step of acquiring a depth image including a plurality of depth values at coordinates in a two-dimensional coordinate system which are distance information for the object;
a depth value extracting step of extracting three-dimensional information of the object on the basis of the depth values included in the acquired depth image and the extracted outline of the object;
a cutout step of cutting out the depth values in a predetermined range out of the depth values inside of the extracted outline of the object; and
an output step of outputting image information inside of the extracted outline of the object and the cut-out depth values in correlation.
